(19) Europäisches Patentamt / European Patent Office / Office européen des brevets

(11) **EP 1 910 951 B1**

(12) **EUROPÄISCHE PATENTSCHRIFT**

(45) Veröffentlichungstag und Bekanntmachung des Hinweises auf die Patenterteilung:
**04.01.2017  Patentblatt 2017/01**

(21) Anmeldenummer: **06792499.3**

(22) Anmeldetag: **13.07.2006**

(51) Int Cl.:
***G06F 17/50*** *(2006.01)*

(86) Internationale Anmeldenummer:
**PCT/EP2006/064183**

(87) Internationale Veröffentlichungsnummer:
**WO 2007/014831 (08.02.2007 Gazette 2007/06)**

(54) **MODELLIERVERFAHREN FÜR DEN ZEITLICHEN VERLAUF DES ZUSTANDS EINES STAHLVOLUMENS DURCH EINEN RECHNER UND HIERMIT KORRESPONDIERENDE GEGENSTÄNDE**

METHOD FOR MODELLING A TIME GRADIENT OF A STEEL VOLUME STATE BY MEANS OF A COMPUTER AND CORRESPONDING OBJECTS

PROCÉDÉ DE MODÉLISATION POUR LA VARIATION DANS LE TEMPS DE L'ÉTAT D'UN VOLUME D'ACIER AU MOYEN D'UN ORDINATEUR ET OBJETS CORRESPONDANTS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.08.2005   DE 102005036068**

(43) Veröffentlichungstag der Anmeldung:
**16.04.2008   Patentblatt 2008/16**

(73) Patentinhaber: **Primetals Technologies Germany GmbH**
**91052 Erlangen (DE)**

(72) Erfinder:
- **WEINZIERL, Klaus**
  **90480 Nürnberg (DE)**
- **KURZ, Matthias**
  **91052 Erlangen (DE)**
- **FRANZ, Klaus**
  **90455 Nürnberg (DE)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
WO-A-01/91943          WO-A1-03/060754
DE-B3- 10 251 716

- **RETI T ET AL: "Computer simulation of steel quenching process using a multi-phase transformation model" COMPUTATIONAL MATERIALS SCIENCE ELSEVIER NETHERLANDS, Bd. 22, Nr. 3-4, Dezember 2001 (2001-12), Seiten 261-278, XP002403410 ISSN: 0927-0256**
- **QUIDORT D ET AL: "Isothermal growth kinetics of bainite in 0.5% C steels" ACTA MATERIALIA ELSEVIER UK, Bd. 49, Nr. 20, 3. Dezember 2001 (2001-12-03), Seiten 4161-4170, XP002403484 ISSN: 1359-6454**

EP 1 910 951 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die vorliegende Erfindung betrifft zunächst ein Modellierverfahren für den zeitlichen Verlauf des Zustands eines Stahlvolumens durch einen Rechner,

- wobei das Stahlvolumen im Rechner durch eine Anzahl von Volumenelementen modelliert wird,
- wobei der Zustand des Stahlvolumens zu einem bestimmten Zeitpunkt für jedes der Volumenelemente Größen umfasst, die für eine zu diesem Zeitpunkt in dem jeweiligen Volumenelement vorhandene Enthalpie und für Anteile charakteristisch sind, in denen der Stahl im jeweiligen Volumenelement zu diesem Zeitpunkt in den Phasen Austenit, Ferrit und Zementit vorliegt,
- wobei der Rechner für mindestens eines der Volumenelemente den zeitlichen Verlauf der charakteristischen Größen durch Lösen einer Wärmeleitungsgleichung und einer Phasenumwandlungsgleichung ermittelt.

Sodann betrifft die vorliegende Erfindung einen Datenträger mit einem auf dem Datenträger gespeicherten Computerprogramm zur Durchführung eines derartigen Modellierverfahrens und einen Rechner mit einem Massenspeicher, in dem ein Computerprogramm hinterlegt ist, so dass der Rechner bei Aufruf des Computerprogramms ein derartiges Modellierverfahren ausführt.

Schließlich betrifft die vorliegende Erfindung noch eine Beeinflussungseinrichtung zum Beeinflussen der Temperatur eines tatsächlichen Stahlvolumens, insbesondere eine Kühlstrecke, die von einem derartigen Rechner gesteuert wird, sowie Stahl, der eine solche Beeinflussungseinrichtung durchlaufen hat.

Derartige Modellierverfahren und die entsprechenden Gegenstände sind bekannt. Beispielhaft wird auf die DE-B4-101 29 565 und insbesondere auf die DE-B3-102 51 716 der Anmelderin verwiesen.

In der Prozessautomatisierung der Behandlung von Stahl besitzt die Modellierung der Metalltemperatur besondere Bedeutung. Dabei ist es prinzipiell unerheblich, ob die Modellierung der Metalltemperatur bezüglich eines Stahlvolumens erfolgt, das sich in einem Ofen befindet oder beispielsweise einen Walzprozess oder einen Kühlprozess durchläuft. Phasenumwandlungen, die bei Metallen auch innerhalb der festen Phase auftreten können, erschweren dabei Berechnungen mit der Wärmeleitungsgleichung. Ist eine genaue Berechnung erforderlich, muss die Phasenumwandlung in die Ermittlung des zeitlichen Verlaufs des Zustands des Metallvolumens mit einbezogen werden.

Insbesondere bei Stahl erfolgt die Phasenumwandlung nur verzögert, weil die auftretenden Temperaturänderungen so groß sind, dass die Umwandlung der Temperaturänderung nicht folgen kann. Häufig wird dies durch Legierungselemente verursacht, die dem Stahl beigefügt sind.

Der Grund für diese verzögerte Umwandlung liegt - im Beispiel Stahl - am Vorhandensein von Kohlenstoff in Stahl. Denn Kohlenstoff löst sich beispielsweise zwar relativ gut in Austenit, aber nur in sehr geringem, praktisch vernachlässigbarem Umfang in Ferrit. Dadurch werden Phasenumwandlungen von Austenit zu Ferrit verzögert, weil der Kohlenstoff im Austenit zunächst abdiffundieren muss, bevor sich Ferrit bilden kann.

Austenit kann auch noch eine weitere Phase bilden, nämlich Zementit. Zementit bildet zusammen mit Ferrit eine Mischphase, die auch als Perlit bezeichnet wird. Es erscheint auf den ersten Blick völlig unklar und nahezu aussichtslos, einen derart komplizierten Vorgang bei der Wärmeleitungsgleichung korrekt zu berücksichtigen.

Im Stand der Technik wurden zunächst folgende Lösungen ergriffen:

- Die Modellierung der Phasenumwandlung wurde stark vereinfacht.
- Die Modellierung der Phasenumwandlung erfolgte in einer Vorausberechnung mit einem angenäherten Temperaturverlauf. Sodann wurde die Phasenumwandlung festgehalten. Exotherme Vorgänge bei der Phasenumwandlung wurden durch Wärmequellen in der fourierschen Wärmeleitungsgleichung berücksichtigt. Diese Kopplung der Phasenumwandlung in Form von Wärmequellen an die fouriersche Wärmeleitungsgleichung löst das Problem aber nur scheinbar. Denn eine genauere Betrachtung zeigt, dass der Ansatz physikalisch falsch ist. Dies ist insbesondere dadurch ersichtlich, dass die Wärmequellen gesondert zu parametrieren sind, was bei einer korrekten Lösung nicht erforderlich ist.

Aus der DE-B4-101 29 565 ist ein bereits erheblich verbesserter Ansatz bekannt, bei dem die Wärmeleitungsgleichung korrekt angesetzt ist. Die Phasenumwandlungsgleichung ist aber nur für ein Zweiphasensystem (z. B. das System Austenit-Ferrit) gültig. Eine Erweiterung auf ein Dreiphasensystem (z. B.. das System Austenit-Ferrit-Zementit) ist nicht ohne weiteres möglich. Auch sind die in der dortigen Wärmeleitungsgleichung auftretenden Größen Wärmeleitfähigkeit und Temperatur nur von der Enthalpie und einem Phasenanteil abhängig. Die Abhängigkeit von einem Phasenanteil ist dabei ausreichend, da auf Grund der dortigen Betrachtung eines reinen Zweiphasensystems der zweite Phasenanteil sich implizit aus dem Umstand ergibt, dass die Summe der beiden Phasenanteile eins sein muss.

In der ebenfalls bereits erwähnten DE-B3-102 51 716 sind die Wärmeleitfähigkeit und die Temperatur Funktionen, die von der Enthalpie und den Anteilen aller betrachteten Phasen abhängen. Bei einem Dreiphasensystem, z. B.

dem in der DE-B3-102 51 716 erwähnten Sysem Austenit-Ferrit-Zementit, sind die .Wärmeleitfähigkeit und die Temperatur also Funktionen, die von der Enthalpie und allen Phasen abhängen.

Versuche, die Verfahren der beiden letztgenannten Schriften zu implementieren, führten zwar zu erheblich besseren Ergebnissen als zuvor. Es traten aber dennoch Abweichungen zwischen dem gemäß dem Modellierverfahren ermittelten Verhalten des Stahlvolumens und dem tatsächlichen Verhalten eines korrespondierenden tatsächlichen Stahlvolumens auf.

Aus dem Fachaufsatz "Computer simulation of steel quenching process using a multi-phase transformation model "von Tamas Reti et al., erschiehen in Computational Materials Science 22 (2001), Seiten 261 bis 278, ist bekannt, dass die Phasenumwandlung von Austenit in Ferrit, Perlit und Bainit von der Kohlenstoffkonzentration in Austenit.abhängt. In dem Fachaufsatz wird die Konzentration von Kohlenstoff in der Phase Austenit gleich der Konzentration von Kohlenstoff im betrachteten Stahl insgesamt gesetzt.

Die Aufgabe der vorliegenden Erfindung besteht darin, ein Modellierverfahren der eingangs genannten Art und die hiermit korrespondierenden Gegenstände zu schaffen, mittels derer eine qualitativ hochwertigere Modellierung des Stahlvolumens .möglich ist, wobei gleichzeitig der hierfür erforderliche Rechenaufwand gering gehalten wird.

Die Aufgabe wird dadurch gelöst, dass je eine der charakteristischen Größen eine innerhalb des jeweiligen Volumenelements örtlich invariable mittlere Konzentration interstitieller Elemente in der Phase Austenit des jeweiligen Volumenelements, der Anteil an der Phase Austenit im jeweiligen Volumenelement und die Enthalpie des jeweiligen Volumenelements ist, so dass die Anteile an den Phasen Ferrit und Zementit im jeweiligen Volumenelement von den charakteristischen Größen abgeleitete Größen sind. Interstitielle Elemente sind dabei Elemente, die bei Adsorption in Eisen Zwischengitterplätze einnehmen. Beispiele interstitieller Elemente sind Kohlenstoff und Stickstoff. Der Gegensatz zu interstitiellen Elementen sind substitutionelle Elemente. Diese Elemente ersetzen Eisenatome an ihren Gitterplätzen. Beispiele substitutioneller Elemente sind Mangan und Nickel.

In der Realität ist die Konzentration interstitieller Elemente in der Phase Austenit ortsabhängig. Genau genommen müsste daher im Rahmen des Modellierverfahrens die genaue Verteilung interstitieller Elemente in der Phase Austenit berücksichtigt werden. Diese Vorgehensweise führt jedoch zu einem extrem hohen Rechenaufwand, bleibt aber nahezu ohne Auswirkung auf die Qualität der Modellierung.

Bei der erfindungsgemäßen Vorgehensweise ist es nicht erforderlich, explizit die Phasenanteile als Parameter zu verwenden. Denn wenn mit pA, pF und pZ die Anteile an den Phasen Austenit, Ferrit und Zementit im jeweiligen Volumenelement bezeichnet werden, gilt die Beziehung

$$pF + pA + pZ = 1. \tag{1}$$

Wenn weiterhin mit cA, cF und cZ die jeweilige, innerhalb des jeweiligen Volumenelements örtlich invariable mittlere Konzentration interstitieller Elemente in den Phasen Austenit, Ferrit und Zementit in dem jeweiligen Volumenelement und mit c der Gesamtanteil interstitieller Elemente im jeweiligen Volumenelement bezeichnet wird, gilt weiterhin

$$cFpF + cApA + cZpZ = c. \tag{2}$$

Der Gesamtanteil c interstitieller Elemente im Stahl kann dabei ohne weiteres als konstant angesehen werden. Da ferner die mittlere Konzentration cF interstitieller Elemente in der Phase Ferrit bekanntermaßen nahezu Null ist, kann sie in Gleichung 3 praktisch vernachlässigt werden. Auch ist der Wert cZ für Zementit eine bekannte Konstante, nämlich 0,25. Die Gleichung 3 kann daher zu

$$cApA + 0,25pZ = c \tag{3}$$

vereinfacht werden. In den Gleichungen 1 und 3 kommen daher fünf Größen vor, nämlich die Anteile pA, pF und pZ an den Phasen Austenit, Ferrit und Zementit sowie die örtlich invariable mittlere Konzentration cA interstitieller Elemente in der Phase Austenit und der Gesamtanteil c interstitieller Elemente im Stahl. Bei Vorgabe von drei unabhängigen dieser fünf Größen sind somit die beiden übrigen Größen sofort und unmittelbar eindeutig ermittelbar.

Insbesondere ergibt sich auf Grund von Gleichung 3 der Anteil pZ an der Phase Zementit sofort zu

$$pZ = 4(c - cApA). \tag{4}$$

Auf Grund von Gleichung 1 ist damit sofort auch der Anteil pF an Ferrit in dem mindestens einen Volumenelement bestimmt.

Durch diese Vorgehensweise ist insbesondere die Ermittlung der Phasenanteile pF-und pZ an den Phasen Ferrit und Zementit in dem jeweiligen Volumenelement und damit die Ermittlung aller relevanten Eingangsparameter möglich, ohne Divisionen vornehmen zu müssen. Insbesondere die Vermeidung von Divisionen weist den Vorteil auf, den erhöhten Rechenaufwand zum Durchführen von Divisionen vermeiden zu können und auch keine Sonderregelung für den Fall vorsehen zu müssen, dass der Divisor den Wert Null annimmt. Weiterhin werden Ungenauigkeiten vermieden, die sich anderenfalls dadurch ergäben, dass im Einzelfall durch kleine Werte dividiert werden muss.

Dennoch ist es auf einfache Weise möglich, dass der Rechner im Rahmen des Lösens der Wärmeleitungsgleichung und/oder im Rahmen des.Lösens der Phasenumwandlungsgleichung für das mindestens eine Volumenelement eine Beziehung zwischen der Enthalpie und der Temperatur ermittelt und dabei berücksichtigt, dass die Beziehung zwischen der Enthalpie und der Temperatur von der Konzentration interstitieller Elemente in der Phase Austenit des jeweiligen Volumenelements abhängt.

Denn im Stand der Technik wurde bisher versucht, die Beziehung zwischen der Enthalpie und der Temperatur anhand der Gleichung

$$e = pA\dot{e}A(T) + \dot{p}F\dot{e}F(T) + \overline{p}Z\dot{e}Z(T) \qquad (5)$$

zu ermitteln, wobei eA, eF und eZ Funktionen sind, die jeweils eine Beziehung zwischen der Enthalpie und der Temperatur in dem mindestens einen Volumenelement für den Fall beschreiben, dass das Volumenelement ausschließlich in der Phase Austenit, Ferrit bzw. Zementit vorliegt. Diese.Vorgehenswiese ist zwar vom Ansatz her korrekt, sie berücksichtigt aber nicht, dass die Beziehung zwischen der Enthalpie und der Temperatur in der Phase Austenit auch von der Konzentration interstitieller Elemente in der Phase Austenit abhängt. Bei der vorliegenden Erfindung hingegen kann diese Abhängigkeit bei der Funktion eA ohne weiteres berücksichtigt werden.

Vorzugsweise ermittelt der Rechner bereits vor der Modellierung des zeitlichen Verlaufs des Zustands des Stahlvolumens für eine Vielzahl von Werten der charakteristischen Größen die Beziehung zwischen der Enthalpie und der Temperatur und speichert sie als Stützstellenfeld ab. Denn dadurch ist es möglich, dass der Rechner im Rahmen der Modellierung des zeitlichen Verlaufs des Zustands des Stahlvolumens die in dem mindestens einen Volumenelement herrschende Temperatur anhand des Stützstellenfeldes ermittelt. Denn dadurch kann der Rechenaufwand zum Lösen der Wärmeleitungsgleichung und der Phasenumwandlungsgleichung deutlich reduziert werden. Die Vorabermittlung wird dabei erst dadurch ermöglicht, dass die Konzentration interstitieller Elemente innerhalb des mindestens einen Volumenelements als örtlich invariabel angesetzt wird.

In analoger Weise ist es auch möglich, dass der Rechner bereits vor der Modellierung des zeitlichen Verlaufs des Zustands des Stahlvolumens für eine Vielzahl von Werten der charakteristischen Größen eine Beziehung zwischen der Enthalpie und der Wärmeleitfähigkeit ermittelt und als Stützstellenfeld abspeichert. Denn dadurch wird ermöglicht, dass der Rechner im Rahmen der Modellierung des zeitlichen Verlaufs des Zustands des Stahlvolumens die in dem mindestens einen Volumenelement herrschende Wärmeleitfähigkeit anhand des Stützstellenfeldes ermittelt.

Theoretisch ist es auch bei der Wärmeleitfähigkeit möglich, eine Abhängigkeit der wärmeleitfähigkeit in der Phase Austenit von der Konzentration interstitieller Elemente in der Phase Austenit zu berücksichtigen. In der Praxis sind diese Auswirkungen aber oft vernachlässigbar.

Es ist von Vorteil, wenn die Wärmeleitungsgleichung im mehr- bzw. eindimensionalen Fall die Form

$$\frac{\partial e}{\partial t} - div\left[\frac{\lambda}{\rho} \cdot gradT\right] = \frac{\partial Q}{\partial t} \qquad bzw. \qquad \frac{\partial e}{\partial t} - \frac{\partial}{\partial x}\left[\frac{\lambda}{\rho} \cdot \frac{\partial T}{\partial x}\right] = \frac{\partial Q}{\partial t}$$

aufweist.

Dabei sind $\lambda$ die Wärmeleitfähigkeit des mindestens einen Volumenelements, p'die Dichte des Stahls und Q eine Wärmemenge, die in dem mindestens einen Volumenelement durch äußere Einflüsse erzeugt wird. Die in dem mindestens einen Volumenelement durch äußere Einflüsse erzeugte Wärmemenge enthält dabei keine Beiträge, die von Phasenumwandlungen herrühren.

Dieser Ansatz für die Wärmeleitungsgleichung weist den Vor-. teil auf, dass durch die Wärmeleitung und durch Phasenumwandlungen bewirkte Temperaturänderungen korrekt modelliert werden.

Zum Lösen der Phasenumwandlungsgleichung sind verschiedene Vorgehensweisen möglich. Beispielsweise ist es möglich, dass der Rechner im Rahmen des Lösens der Phasenumwandlungsgleichung die Gibbsschen freien Enthalpien der Phasen Austenit, Ferrit und Zementit, anhand der Gibbsschen freien Enthalpien Umwandlungsraten der Phasen Austenit, Ferrit und Zementit und anhand der Umwandlungsraten die Anteile pA, pF und pZ an den Phasen Austenit, Ferrit und Zementit ermittelt. Diese Vorgehensweise ist beispielsweise in der DE-B3-102 51 716 detailliert beschrieben.

Alternativ ist es auch möglich, dass der Rechner im Rahmen des Lösens der Phasenumwandlungsgleichung

-   unter Lösen mindestens eines Stefan-Problems für das mindestens eine Volumenelement einen austenitischen Bereich und eine Verteilung einer Konzentration der interstitiellen Elemente im austenitischen Bereich des mindestens einen Volumenelements ermittelt und
-   anhand des Verhältnisses des austenitischen Bereichs und des mindestens einen Volumenelements insgesamt den Anteil an der Phase Austenit ermittelt.

Diese Vorgehensweise ist in der älteren, am Anmeldetag der vorliegenden Anmeldung nicht veröffentlichten deutschen Patentanmeldung DE 10 2004 005 919.5 der Anmelderin ausführlich beschrieben. In einem derartigen Fall kann die mittlere Konzentration interstitieller Elemente in der Phase Austenit durch Mittelung der Verteilung der Konzentration der inter.stitiellen Elemente im austenitischen Bereich des mindestens einen Volumenelements ermittelt werden.

Das erfindungsgemäße Modellierverfahren kann offline ausgeführt werden. Insbesondere auf Grund der Vermeidung unnötiger Divisionen und der Möglichkeit, die Temperatur und die Wärmeleitfähigkeit vorab als mehrdimensionale Stützstellenfelder zu ermitteln, ist es aber auch möglich, dass der Rechner das Modellierverfahren online und in Echtzeit mit dem Durchlauf eines korrespondierenden tatsächlichen Stahlvolumens durch eine Beeinflussungseinrichtung zum thermischen Beeinflussen des tatsächlichen Stahlvolumens ausführt.

Die Beeinflussungseinrichtung ist in der Regel als Kühlstrecke für das Stahlvolumen ausgebildet. Es wäre aber auch möglich, dass die Beeinflussungseinrichtung als walzgerüst für das Stahlvolumen ausgebildet ist.

Es ist möglich, dass der Rechner nur die Modellierung als solche ausführt, aber keine Steuereingriffe vornimmt. Dies kann beispielsweise sinnvoll sein, um das Modellierverfahren zu testen und zu optimieren. In vielen Fällen wird es aber so sein, dass der Rechner unter Anwendung des Modellierverfahrens Prozessführungsgrößen zur gezielten Beeinflussung des Zustands des tatsächlichen Stahlvolumens ermittelt und an die Beeinflussungseinrichtung übermittelt.

Vorzugsweise wird dem Rechner eine nach dem thermischen Beeinflussen des tatsächlichen Stahlvolumens erfasste tatsächliche' Temperatur des tatsächlichen Stahlvolumens zugeführt. Denn dann ist der Rechner in der Lage, die tatsächliche Temperatur mit der korrespondierenden, im Rahmen des Modellierverfahrens ermittelten Temperatur zu vergleichen und das Modellierverfahren gegebenenfalls entsprechend anzupassen.

Die Aufgabe der Erfindung wird durch die in dem unabhängigen Patentanspruch 1 definierten Merkmalen gelöst. Vorteilhafte Weiterbildungen sind in den Patentansprüchen spezifiziert.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung:

FIG 1         schematisch einen Rechner,
FIG 2         ein Ablaufdiagramm,
FIG 3         schematisch eine Beeinflussungseinrichtung und einen Rechner,
FIG 4         ein Schema zur Ermittlung einer Beziehung zwischen der Enthalpie und der Temperatur,
FIG 5 und 6   eine Kombination einer Wärmeleitungsgleichung mit einer Phasenumwandlungsgleichung,
FIG 7 und 8   mögliche Implementierungen eines Schrittes von FIG 2 und
FIG 9         ein weiteres Ablaufdiagramm.

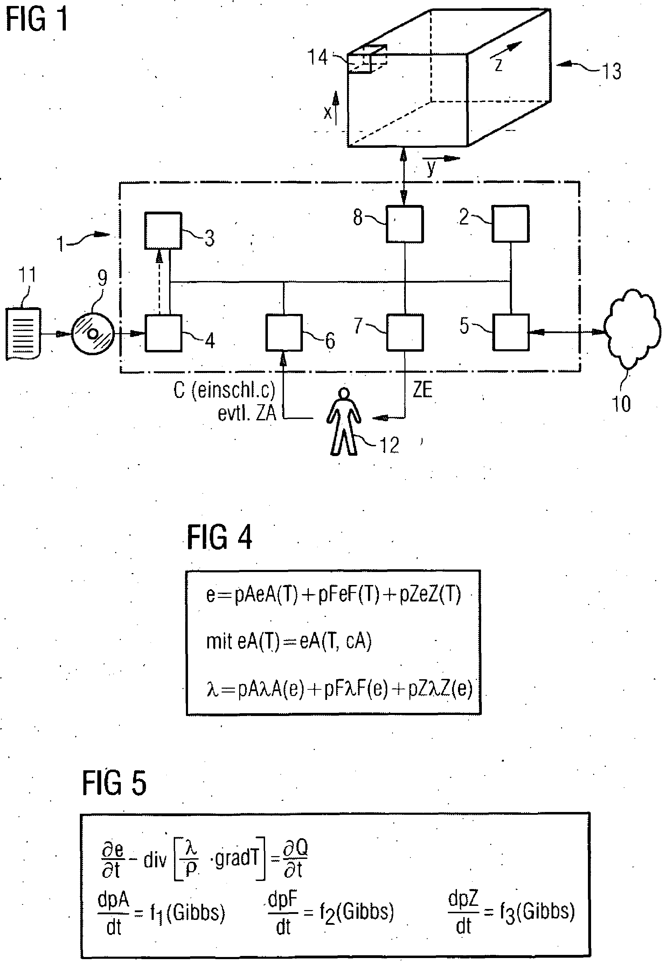

Gemäß FIG 1 weist ein Rechner 1 übliche Komponenten 2 bis 8 auf. Es sind dies zunächst eine Prozessoreinheit 2 und ein. Massenspeicher 3.'Der Massenspeicher 3 kann beispielsweise als Festplatte ausgebildet sein. Es sind dies weiterhin Schnittstellen 4 und 5. Die Schnittstelle 4 ist eine Schnittstelle zum Ankoppeln eines als Wechselmedium ausgebildeten Datenträgers 9 an den Rechner 1. Je nach Ausgestaltung der Schnittstelle 4 kann der Datenträger 9 beispielsweise als CD-ROM oder als USB-Stick ausgebildet sein. Die Schnittstelle 5 ist eine Schnittstelle zu einem Rechnernetz 10, z. B. zum Internet bzw. World Wide Web. Die weiteren Komponenten 6 bis 8 des Rechners 1 sind eine Eingabeeinrichtung 6, eine Ausgabeeinrichtung 7 und ein Arbeitsspeicher 8. Die Eingabeeinrichtung 6 kann beispielsweise eine Tastatur und eine Maus umfassen. Die Ausgabeeinrichtung 7 kann ein Sichtgerät (Terminal) und einen Drucker umfassen.

Auf dem Wechselmedium 9 ist ein Computerprogramm 11 gespeichert. Das Compüterprogramm 11 wird nach dem Ankoppeln des Wechselmediums 9 an die Schnittstelle 4 vom Rechner 1 ausgelesen. Das ausgelesene Computerprogramm 11 wird vom Rechner 1 im Massenspeicher 3 abgespeichert. Bei Aufruf des Computerprogramms 11 - beispielsweise auf Grund entsprechender Eingaben eines Anwenders 12 über die Eingabeeinrichtung 6 - führt der Rechner 1 daher ein Modellierverfahren aus, das nachfolgend näher erläutert wird.

Mittels des Modellierverfahrens soll der zeitliche Verlauf des Zustands Z eines Stahlvolumens 13 modelliert werden. Dies geschieht dadurch, dass das Stahlvolumen 13 im Rechner 1 - genauer: in dessen Arbeitsspeicher 8 - durch eine Anzahl von Volumenelementen 14 modelliert wird. In der Regel wird dabei das Stahlvolumen 13 durch eine Vielzahl von Volumenelementen 14 modelliert, die aneinander angrenzen. Im Einzelfall ist es aber auch möglich, dass das Stahlvolumen 13 nur durch ein einziges Volumenelement 14 modelliert wird.

Wenn das Stahlvolumen 13 durch mehrere, aneinander angrenzende Volumenelemente 14 modelliert wird, kann die Anordnung der Volumenelemente 14 alternativ eindimensional, zweidimensional oder dreidimensional sein. Der allgemeinste Fall ist dabei die dreidimensionale Anordnung. Eine zweidimensionale Anord nung der Volumenelementen 14 kommt beispielsweise in Frage, wenn das Verhalten eines korrespondierenden tatsächlichen Stahlvolumens 13' modelliert werden soll, welches stabförmig ausgebildet ist, also beispielsweise ein Knüppel 13' oder ein sonstiges Profil. Denn in diesen Fällen ist der Wärmefluss in Stabrichtung praktisch vernachlässigbar. Eine eindimensionale Anordnung der Volumenelemente 14 kommt insbesondere dann in Frage, wenn das tatsächliche Stahlvolumen 13' bandförmig ist. Denn in diesem Fall ist ein Wärmefluss in Bändquerrichtung und in Bandlängsrichtung praktisch vernachlässigbar. Nur in Banddickenrichtung tritt ein nennenswerter Wärmefluss auf.

Der Zustand eines einzelnen Volumenelements 14 zu einem bestimmen Zeitpunkt t umfasst die Enthalpie e des jeweiligen Volumenelements 14 und die Anteile pA, pF, pZ an den Phasen Austenit, Ferrit und Zementit im jeweiligen Volumenelement 14 bzw. hierfür charakteristische Größen e, pA, cA. Hiermit korrespondierend umfasst der Zustand Z des Stahlvolumens 13 zu diesem Zeitpunkt t die Gesamtheit der Zustände aller Volumenelemente 14 des modellierten Stahlvolumens 13.

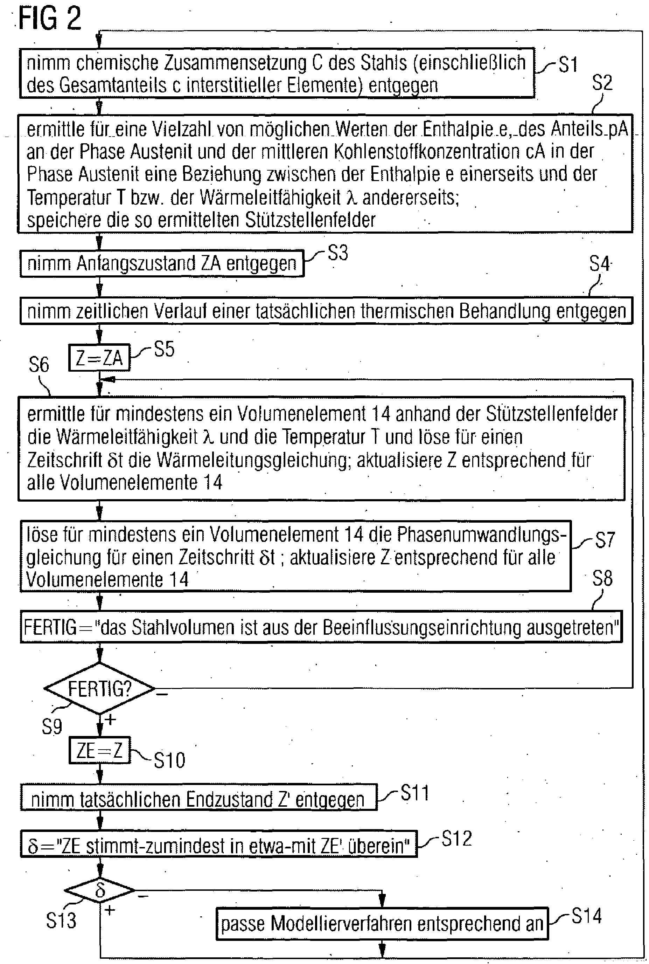

Der zeitliche Verlauf des Zustands Z des Stahlvolumens 13 ist von einer Vielzahl von Parametern abhängig. Einer der Parameter ist die chemische Zusammensetzung C des Stahls. Die chemische Zusammensetzung C umfasst unter anderem einen Gesamtanteil c interstitieller Elemente. Diese Zusammensetzung wird dem Rechner 1 daher gemäß FIG 2 in einem Schritt S1 zugeführt.

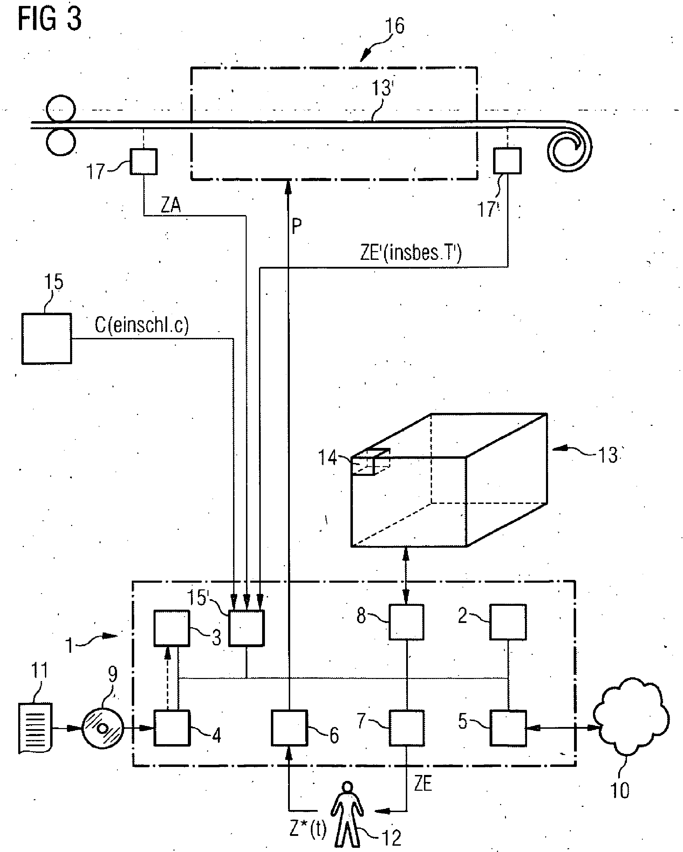

Die Vorgabe der chemischen Zusammensetzung C kann beispielsweise durch eine entsprechende Eingabe des Anwenders 12 erfolgen. Sie kann dem Rechner 1 aber auch - siehe FIG 3 - von einem übergeordneten Prozessleitrechner 15 über eine geeignete Rechner-Rechner-Schnittstelle 15' vorgegeben werden.

Das in Stahl am häufigsten vorkommende interstitielle Element ist Kohlenstoff. Der kürzen Schreibweise wegen wird daher nachfolgend stets von Kohlenstoff gesprochen, auch wenn damit die interstitiellen Elemente allgemein gemeint sind.

In einem Schritt S2 - also noch vor dem Lösen der Wärmeleitungsgleichung und der Phasenumwandlungsgleichung - ermittelt der Rechner 1 sodann für die Wärmeleitfähigkeit $\lambda$ des Stahls und für die Temperatur T des Stahls zwei mehrdimensionale Stützstellenfelder. Die Stützstellenfelder weisen daher mindestens drei Eingangsparameter auf, nämlich die Enthalpie e des jeweiligen Volumenelements 14 und zwei Größen pA, cA. Die eine charakteristische Größe ist der Anteil pA, in dem der Stahl im jeweiligen Volumenelement 14 in der Phase Austenit vorliegt. Die andere charakteristische Größe ist die innerhalb des jeweiligen Volumenelements 14 örtlich invariable mittlere Kohlenstoffkonzentration cA in der Phase Austenit des jeweiligen Volumenelements 14.

Der Gesamtkohlenstoffanteil c des Stahls ist bei gegebener chemischer Zusammensetzung C des Stahls zeitlich konstant und für alle Volumenelemente 14 derselbe. Auf Grund der Beziehungen zwischen den Phasenanteilen pA, pF, pZ, dem Gesamtkohlenstoffanteil c und der mittleren Kohlenstoffkonzentration cA in der Phase Austenit können daher die beiden weiteren Phasenanteile pF, pZ an den Phasen Ferrit und Zementit im jeweiligen Volumenelement 14 ohne weiteres ermittelt werden.

Der Rechner 1 ermittelt im Schritt S2 also für eine Vielzahl von möglichen Werten der Enthalpie e, des Anteils pA an der Phase Austenit und der mittleren Kohlenstoffkonzentration cA in der Phase Austenit des jeweiligen Volumenelements 14 die korrespondierende Temperatur T und die korrespondierende Wärmeleitfähigkeit $\lambda$ des Volumenelements 14. Es ergibt sich somit eine funktionale Beziehung, zwischen der Enthalpie e einerseits und der Temperatur T bzw. der Wärmeleitfähigkeit $\lambda$ andererseits. Diese Stützstellenfelder werden gespeichert. Sie können daher später im Rahmen des Lösens der Wärmeleitungsgleichung sehr schnell durch lineare Interpolation oder nicht lineare Interpolation (z. B. mittels mehrdimensionaler B-Splines) ausgewertet werden.

Vorzugsweise berücksichtigt der Rechner 1 bei der Ermittlung der Beziehung zwischen der Enthalpie e und der Temperatur T die mittlere Kohlenstoffkonzentration cA in der Phase Austenit als solche, also nicht nur dazu, die Anteile pF und pt zu bestimmen.

Die Beziehung zwischen der Enthalpie e und der Temperatur T wird gemäß FIG 4 nämlich vorzugsweise anhand der Formel

$$e = pAeA(T) + pFeF(T) + pZeZ(T) \qquad\qquad (6)$$

ermittelt. eA, eF und eZ sind dabei Funktionen, die jeweils eine Beziehung zwischen der Enthalpie e und der Temperatur T in den Volumenelementen 14 beschreiben. eF beschreibt dabei die Beziehung für den Fall, dass das Volumenelement 14 ausschließlich in der Phase Ferrit vorliegt. Analog beschreibt eZ die Beziehung für den Fall, dass das Volumenelement 14 ausschließlich in der Phase Zementit vorliegt. Die Funktionen eF und eZ sind nicht von der mittleren Kohlenstoffkonzentration cA in der Phase Austenit der Volumenelemente 14 abhängig. Die Funktion eA hingegen, welche die Beziehung zwischen der Enthalpie e und der Temperatur T für den Fall beschreibt, dass das Volumenelement 14 in der Phase Austenit vorliegt, ist als solche von der mittleren Kohlenstoffkonzentration cA in der Phase Austenit abhängig. Diese Abhängigkeit wird daher bei der Funktion eA'gemäß FIG 4 mit berücksichtigt.

Wenn man ganz genau rechnen wollte, wäre es sogar erforderlich, die Kohlenstoffkonzentration in der Phase Austenit innerhalb des jeweiligen Volumenelements 14 ortsvariabel anzusetzen. Dann wäre es für die Temperatur T aber nicht mehr möglich, sie vorab in Form eines Stützstellenfeldes zu ermitteln. In diesem Fall müsste die Ermittlung der Temperatur T also im Rahmen der Modellierung des zeitlichen Verlaufs des Zustands Z des Stahlvolumens 13 selbst erfolgen. Diese Vorgehensweise würde auch einen erheblichen Rechenaufwand erfordern. Aus diesem Grund wird die Kohlenstoffkonzentration cA in der Phase Austenit innerhalb des jeweils betrachteten Volumenelements 14 als örtlich invariabel angesetzt.

Die Ermittlung des Stützstellenfeldes für die Wärmeleitfähigkeit $\lambda$ erfolgt gemäß FIG 4 in ähnlicher Weise anhand der Gleichung

$$\lambda = pA\lambda A(e) + pF\lambda F(e) + pZ\lambda Z(e). \qquad\qquad (7)$$

$\lambda A$, $\lambda F$ und $\lambda Z$ sind dabei Funktionen, die jeweils eine Beziehung zwischen der Enthalpie e und der Wärmeleitfähigkeit $\lambda$ in dem Volumenelement 14 für den Fall beschreiben, dass das Volumenelement 14 ausschließlich in der Phase Austenit, Ferrit bzw. Zementit vorliegt. Genau genommen ist die Funktion $\lambda A$ ebenfalls von der mittleren Kohlenstoffkonzentration cA in der Phase Austenit des jeweiligen Volumenelements 14 abhängig. Gegebenenfalls ist es daher möglich, diese Abhängigkeit entsprechend zu berücksichtigen. In vielen Anwendungsfällen ist der Einfluss der mittleren Kohlenstoffkonzentration cA in der Phase Austenit des jeweiligen Volumenelements 14 aber nur gering und kann in seinen praktischen Auswirkungen vernachlässigt werden.

In einem Schritt S3 nimmt der Rechner 1 sodann einen Anfangszustand ZA des Stahlvolumens 13 entgegen. Im Rahmen einer reinen offline-Modellierung - siehe FIG. 1 - ist es beispielesweise möglich, dass dieser Anfangszustand ZA dem Rechner 1 vom Anwender'12 über die Eingabeeinrichtung 6 vorgegeben wird. Wenn das Modellierverfahren hingegen online - eventuell sogar in Echtzeit - mit dem Durchlauf eines korrespondierenden tatsächlichen Stahlvolumens 13' durch eine Beeinflussungseinrichtung 16 zum Beeinflussen des tatsächlichen Stahlvolumens 13' (siehe FIG 3)' ausgeführt wird - erfolgt die Vorgabe mittels einer entsprechenden Messeinrichtüng 17, die am Anfang der Beeinflussungseinrichtung 16 angeordnet ist. In beiden Fällen aber entspricht der Anfangszustand ZA dem Zustand des korrespondierenden tatsächlichen Stahlvolumens 13' bei Eintritt in die Beeinflussungseinrichtung 16.

In einem Schritt S4 nimmt der Rechner 1 weiterhin Randbedingungen entgegen. Beispielweise kann dem Rechner 1 vorgegeben werden, mit welchem zeitlichen Verlauf das tatsächliche Stahlvolumen 13' beim Durchlauf durch die Beeinflussungseinrichtung 16 tatsächlich thermisch behandelt wird. Wenn die Beeinflussungseinrichtung 16, was der Regelfall ist, beispielsweise als Kühlstrecke 16 ausgebildet ist, entspricht der zeitliche Verlauf der tatsächlichen thermischen Beeinflussung des Stahlvolumens dem zeitlichen Verlauf der Kühlung des tatsächlichen Stahlvolumens 13'. Wenn die Beeinflussungeinrichtung 16 (ausnahmsweise) als Walzstraße ausgebildet sein sollte, entspricht die thermische Beeinflussung den Walzvorgängen, die am tatsächlichen Stahlvolumen 13' vorgenommen werden, zuzüglich des Abkühlvorgangs beim Durchlaufen der Walzstraße.

In Schritten S5 bis S1Q ermittelt der Rechner 1 dann den zeitlichen Verlauf des Zustands Z des modellierten Stahlvolumens 13.

Im Idealfall geschieht dies dadurch, dass der Rechner 1 individuell für jedes Volumenelement 14 des modellierten Stahlvolumens 13 eine Wärmeleitungsgleichung und eine Phasenumwandlungsgleichung löst und so den zeitlichen Verlauf der charakteristischen Größen e, pA, cA ermittelt. Im Minimalfall geschieht dies dadurch, dass der Rechner 1 die Wärmeleitungsgleichung und die Phasenumwandlungsgleichung für ein einziges der Volumenelemente 14 löst und den für dieses eine Volumenelement 14 ermittelten Zustand für alle anderen Volumenelemente 14 des modellierten Stahlvolumens 13 übernimmt. Denn auch diese letztgenannte Vorgehensweise führt im Ergebnis dazu, dass der Rechner 1 für jedes Volumenelement 14, und jeden Zeitpunkt t die Enthalpie e des jeweiligen Volumenelements 14, den Phasenanteil pA und die Konzentration cA - und damit implizit auch die Phasenanteile pF und pZ - bestimmt.

In der Praxis wird oft ein Mittelweg ergriffen, in dem die Wärmeleitungsgleichung individuell für jedes Volumenelement 14 gelöst wird, die Phasenumwandlungsgleichung aber nur für ein einziges Volumenelement 14 oder nur für einen Teil der Volumenelemente 14, beispielsweise jedes achte ($8 = 2^3$) oder jedes 27. ($27, = 3^3$) Volumenelement 14.

In jedem Fall aber setzt der Rechner 1 im Schritt S5 den momentanen Zustand Z des modellierten Stahlvolumens 13 gleich dem im Schritt S3 zugeführten Anfangszustand ZA des Stahlvolumens 13. Sodann löst der Rechner 1 im Schritt S6 für einen Zeitschritt δt für mindestens eines.der Volumenelemente 14 die Wärmeleitungsgleichung. Weiterhin löst der Rechner 1 im Schritt S7 für denselben Zeitschritt δt für mindestens eines der Volumenelemente 14 die Phasenumwandlungsgleichung. Soweit erforderlich, werden die ermittelten Ergebnisse für die anderen Volumenelemente 14 übernommen. Sicherheitshalber sei ferner erwähnt, dass die Reihenfolge der Schritte S6 und S7 irrelevant ist.

Die Wärmeleitungsgleichung kann - je nach Art des modellierten Stahlvolumens 13 bzw. 13' - mehrdimensional oder eindimensional gelöst werden. Wenn die Wärmeleitungsgleichung mehrdimensional gelöst wird, weist sie gemäß FIG 5 die Form

$$\frac{\partial e}{\partial t} - div\left[\frac{\lambda}{\rho} \cdot gradT\right] = \frac{\partial Q}{\partial t} \qquad\qquad (5)$$

auf. In dieser Gleichung ist t die Zeit, p die Dichte des Stahls und Q die Wärmemenge, die in dem betrachteten Volumenelement 14 durch äußere Einflüsse erzeugt wird. Sie enthält keine Beiträge, die von Phasenumwandlungen herrühren. div und grad sind die üblichen mathematischen Operatoren Divergenz und Gradient.

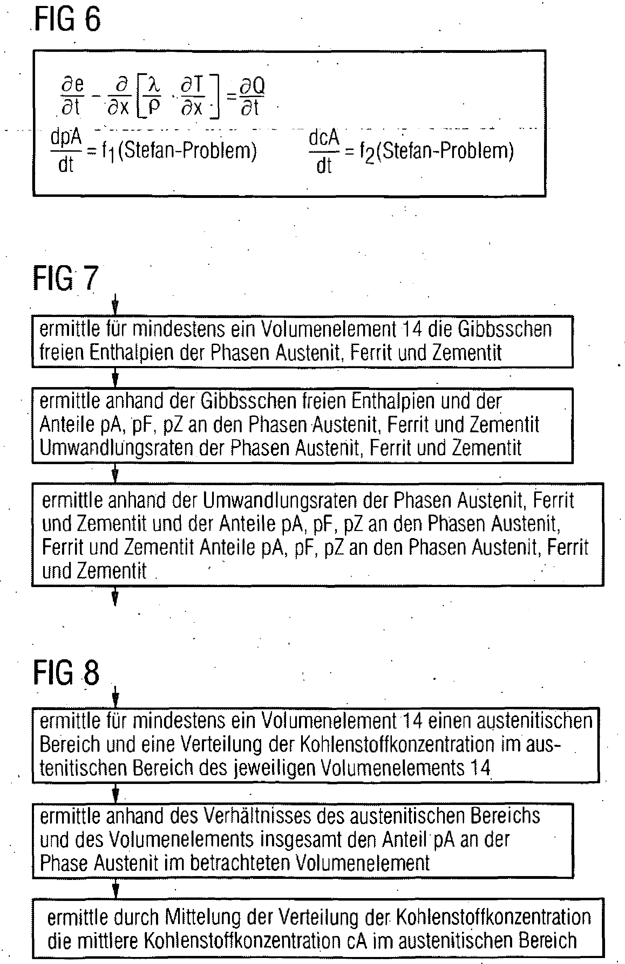

Wenn die Wärmeleitungsgleichung eindimensional gelöst wird, werden in Gleichung 5 die mathematischen Operatoren Divergenz und Gradient durch die eindimensionale Ortsableitung ersetzt. x ist dabei die Ortskoordinate der einen Dimension. Die Wärmeleitungsgleichung vereinfacht sich daher gemäß FIG 6 zu

$$\frac{\partial e}{\partial t} - \frac{\partial}{\partial x}\left[\frac{\lambda}{\rho} \cdot \frac{\partial T}{\partial x}\right] = \frac{\partial Q}{\partial t} \cdot \qquad\qquad (6)$$

Diese Vereinfachung ist zulässig, wenn das zeitliche Verhalten eines Stahlbandes modelliert werden soll. Denn in einem solchen Fall ist der Wärmefluss in Bandlängsrichtung und in Bandquerrichtung vernachlässigbar. Nur in Banddickenrichtung findet ein nennenswerter Wärmefluss statt.

Unabhängig davon, ob die Wärmeleitungsgleichung mehrdimensional oder eindimensional gelöst wird, ermittelt der Rechner 1 aber zum Lösen der Wärmeleitungsgleichung (Schritt S6) und der Phasenumwandlungsgleichung (Schritt S7) gemäß den FIG 5 und 6 die sich jeweils ergebende Wärmeleitfähigkeit λ und die sich jeweils ergebende Temperatur T anhand der im Schritt S2 ermittelten Stützstellenfelder. Die Ermittlung der konkreten Werte für die Wärmeleitfähigkeit λ und die Temperatur T kann dabei beispielsweise durch lineare Interpolation oder durch eine Interpolation mit glatten Kurven - Stichwort mehrdimensionale Splines - erfolgen.

Falls eine noch genauere Ermittlung der Temperatur T gefordert ist, ist.es möglich, zusätzlich auch eine Oberflächenenergie mit zu berücksichtigen. In diesem Fall umfasst der Zustand eines Volumenelements 14 auch eine Anzahl n der im betrachteten Volumenelement 14 zum jeweiligen Zeitpunkt t gebildeten bzw. aufgelösten Perlitschichten, also die Anzahl der Schichten Ferrit-Zementit-Ferrit-Zementit .... Es kann natürlich auch eine hierzu äquivalente Größe herangebogen werden.

Die Anzahl n ergibt in Verbindung mit der Änderung des Anteils pA an der Phase Austenit im betrachteten Volumenelement 14 eine Änderung der im betrachteten Volumenelement 14 enthaltenen Oberflächenenergie. Die Enthalpie e wird in diesem Fall um die Änderung der Oberflächenenergie korrigiert und die Temperatur T dann anhand des korrigierten Wertes der Enthalpie e bestimmt.

Die Korrektur um die Oberflächenenergie kann, da die Oberflächenenergie von der Temperatur T unabhängig ist, schnell und einfach als Offset berücksichtigt werden. Alternativ könnte die Berücksichtigung natürlich auch dadurch erfolgen, dass das Stützstellenfeld für die Temperatur T als weitere Dimension die Änderung der Oberflächenenergie oder auch die Anzahl n der Schichten enthält.

Die Phasenumwandlungsgleichung kann prinzipiell beliebig ausgestaltet sein. Wichtig ist, dass der Rechner 1 im Rahmen des Lösens der Phasenumwandlungsgleichung explizit die charakteristischen Größen pA, cA ermittelt und damit implizit auch ermittelt, zu welchem Anteil pA, pF und pZ der Stahl im betrachteten Volumenelement 14 in den Phasen Austenit, Ferrit und Zementit vorliegt. Dies kann, wie in FIG 4 angedeutet, beispielsweise dadurch geschehen, dass der Rechner 1 im Rahmen des Lösens der Phasenumwandlungsgleichung die Gibbsschen freien Enthalpien der Phasen Austenit, Ferrit und Zementit, ermittelt. Anhand der Gibbsschen freien Enthalpien ermittelt der Rechner 1 dann Umwandlungsraten der Phasen Austenit, Ferrit und Zementit. Anhand der Umwandlungsraten ermittelt der Rechner 1 schließlich die Anteile pA, pF, pZ an den Phasen Austenit, Ferrit und Zementit. Diese Implementierung ist schematisch in FIG 7 dargestellt. Sie stellt somit eine mögliche Ausgestaltung des Schrittes S7 von FIG 2 dar.

FIG 8 zeigt eine mögliche alternative Implementierung des Schrittes S7 von FIG 2. Gemäß FIG 7 ermittelt der Rechner 1 im Rahmen des Lösens der Phasenumwandlungsgleichung einen austenitischen Bereich und eine Verteilung der Kohlenstoffkonzentration im austenitischen Bereich des jeweiligen Volumenelements 14. Die Ermittlung des austenitischen Bereichs und der Verteilung der Kohlenstoffkonzentration erfolgt dabei unter Lösen mindestens eines Stefan-Problems. Anhand des Verhältnisses des austenitischen Bereichs und des Volumenelements 14 insgesamt ermittelt der Rechner dann den Anteil pA an der Phase Austenit im betrachteten Volumenelement 14. Durch Mittelung der Verteilung der Kohlenstoffkonzentration ermittelt der Rechner 1 die mittlere Kohlenstoffkonzentration cA im austenitischen Bereich.

Der Vollständigkeit halber sei dabei erwähnt, dass die Phasenumwandlungsgleichung unabhängig davon bestimmbar ist, ob die Wärmeleitungsgleichung mehr- oder eindimensional angesetzt wird.

Wie bereits erwähnt, ist es möglich, dass der Rechner 1 das Modellierverfahren online und in Echtzeit mit dem Durchlauf eines korrespondierenden tatsächlichen Stahlvolumens 13' durch die Beeinflussungseinrichtung 16 zum thermischen Beinflussen des tatsächlichen Stahlvolumens 13' ausführt. Aus Gründen der möglichen Rechenkapazität ist es daher erforderlich, dass die Volumenelemente 14 eine Größe aufweisen, die erheblich größer als eine tatsächliche Korngröße des Stahls ist. Dies gilt auch dann, wenn der Rechner 1 nur als Beobachter wirkt, also selbst nicht steuernd auf die Beeinflussungseinrichtung 16 einwirkt.

Nach dem Lösen der Zustandsgleichungen in den Schritten S6 und S7 ermittelt der Rechner 1 im Schritt S8 die logische Variable FERTIG. Die logische Variable FERTIG nimmt den Wert "wahr" an, wenn das Stahlvolumen 13 gemäß der Modellierung aus der Beeinflussungseinrichtung 16 ausgetreten ist. Anderenfalls nimmt s'ie den Wert "falsch" an. In Abhängigkeit von der logischen Variable FERTIG prüft der Rechner 1 im Schritt S9, ob er zum Schritt S10 übergehen soll oder ob er einen weiteren Durchlauf durch die Schritte S6 bis S9 vornehmen soll.

Sofern der Rechner 1 die weitere Ausführung des Modellierverfahrens mit dem Schritt S10 fortsetzt, setzt er im Schritt S10 einen Endzustand ZE des modellierten Stahlvolumens 13 auf den zuletzt ermittelten Zustand Z.

Gemäß FIG 2 werden nach dem Schritt S10 noch Schritte S11 bis S14 ausgeführt. Diese Schritte sind aber nur optional.

Im Schritt S11 nimmt der Rechner 1 einen tatsächlichen Endzustand ZE' des tatsächlichen Stahlvolumens 13' entgegen. Beispielsweise kann - siehe FIG 3 - eine weitere Messeinrichtung 17', die am Ende der Beeinflussungseinrichtung 16 angeordnet ist, eine Isttemperatur T' des tatsächlichen Stahlvolumens 13 erfassen.

Im Schritt S12 ermittelt der Rechner 1 eine logische Variable $\delta$. Die logische Variable $\delta$ nimmt den Wert "wahr" an, wenn den im Rahmen des Modellierverfahrens ermittelte Endzustand ZE (zumindest in etwa) mit dem tatsächlichen Endzustand ZE' übereinstimmt. Anderenfalls nimmt sie den Wert "falsch" an.

Der Wert der logischen Variable $\delta$ wird vom Rechner 1 im Schritt S13 überprüft. Je nach dem Wert der logischen Variable $\delta$ wird der Schritt S14 ausgeführt oder auch nicht ausgeführt. Im Rahmen der Ausführung des Schrittes S14 passt der Rechner 1 das Modellierverfahren entsprechend an.

Das Adaptieren des Modellierverfahrens gemäß den Schritten S11 bis S14 ist auch dann möglich, wenn das Modellierverfahren nicht online und/oder nicht in Echtzeit ausgeführt wird. Denn beispielsweise ist es möglich, die tatsächlichen Anfangszustände ZA'und die tatsächlichen Endzustände ZE' zwar in Echtzeit zu erfassen, sie aber nur zwischenzuspeichern. Das Modellierverfahren kann dann zu einem anderen Zeitpunkt offline ausgeführt werden.

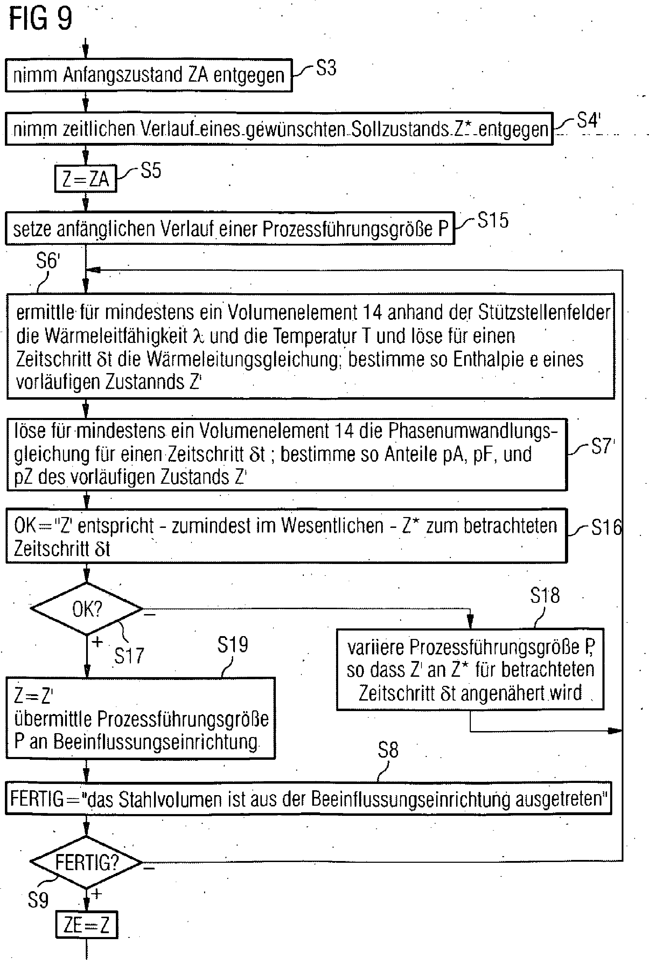

Im Rahmen der bisherigen Ausführungen führte der Rechner 1 eine reine Modellierung des Stahlvolumens 13 durch, aber keine direkte oder indirekte Steuerung der Beeinflussungseinrichtung 16. Auch eine derartige Steuerung ist aber möglich. Hierzu muss die Vorgehensweise von FIG 2 angepasst werden. Dies wird nachfolgend in Verbindung mit FIG 9 erläutert. Die Schritte S1, S2 und S11 bis S14 sind dabei in FIG 9 nicht dargestellt. Sie entsprechen denen von FIG 2.

Zunächst ist es erforderlich, dass der Anfangszustand ZA dem Rechner 1 über die Messeinrichtung 17 zugeführt wird, die vor der Beeinflussungseinrichtung 16 angeordnet ist. Falls eine Adaption des Modellierverfahrens erfolgen soll, ist es weiterhin erforderlich, im Schritt S11 ebenfalls - beispielsweise mittels der Messeinrichtung 17' - direkt den tatsächlichen Endzustand ZE' des tatsächlichen Stahlvolumens 13' beim Austreten aus der Beeinflussungseinrichtung 16 zu erfassen.

Weiterhin ist es gemäß FIG 8 erforderlich, die Schritte S4, S6 und S7 zu Schritten S4', S6' und S7' zu modifizieren. Der Schritt S4 wird dabei dahingehend zum Schritt S4' modifiziert, dass als zu beachtende Randbedingung ein gewünschter Zustandsverlauf Z* vorgegeben wird, beispielsweise ein gewünschter Temperaturverlauf über der Zeit. Die Schritte S6' und S7' korrespondieren im Wesentlichen mit den Schritten S6 und S7. Der Unterschied zu den Schritten S6 und S7 besteht darin, dass das ermittelte Ergebnis nicht direkt den neuen Zustand des modellierten Stahlvolumens ergibt, sondern nur einen vorläufigen Zustand Z'.

Vor allem aber müssen gemäß FIG 9 nach dem Schritt S5 und nach dem Schritt S7' Schritte S15 bis S19 eingefügt werden.

Im Schritt S15 setzt der Rechner 1 einen anfänglichen Wert für eine Prozessführungsgröße P fest, mit der die Beeinflussungseinrichtung 16 auf das korrespondierende tatsächliche Stahlvolumen 13' einwirken soll. Mit diesem Wert der tatsächlichen Beeinflussungsgröße P werden die Schritte S6' und S7' ausgeführt.

Nach Ausführung des Schrittes S7' ermittelt der Rechner 1 im Schritt S16 eine logische Variable OK. Die logische Variable OK nimmt den Wert "wahr" an, wenn der im Rahmen der Ausführung der Schritte S6' und S7' ermittelte vorläufige Zustand Z' mit dem für den jeweiligen Zeitschritt δt korrespondierenden gewünschten Zustand Z* (zumindest im Wesentlichen), übereinstimmt. Anderenfalls nimmt die logische Variable OK den Wert "falsch" an.

Der Wert der logischen Variablen OK wird im Schritt S17 überprüft. Je nach Wert der logischen Variablen OK wird entweder der Schritt S18 oder der Schritt S19 ausgeführt. Im Schritt S18 variiert der Rechner 1 die Prozessführungsgröße P, mittels derer das korrespondierende tatsächliche Stahlvolumen 13' beeinflusst werden soll. Die Variation erfolgt dabei selbstverständlich unter Berücksichtigung des vorläufigen Zustands Z' und des zum jeweiligen Zeitschritt δt gewünschten Zustands Z*. Danach wird zum Schritt S6' zurückgegangen. Wenn der Schritt S19 ausgeführt wird, übernimmt der Rechner 1 den vorläufigen Zustand Z' als neuen Zustand Z. Ferner übermittelt er die Prozessführungsgröße P an die Beeinflussungseinrichtung 16, so dass diese das korrespondierende tatsächliche Stahlvolumens 13' entsprechend der ermittelten Prozessführungsgröße P thermisch beeinflussen kann.

Die Vorgehensweise gemäß FIG 9 wird online und in Echtzeit mit dem Durchlauf des korrespondierenden tatsächlichen Stahlvolumens 13' durch die Beeinflussungseinrichtung 16 ausgeführt. In diesem Fall wird also die Beeinflussungseinrichtung 16 direkt und unmittelbar vom Rechner 1 gesteuert. Es wäre aber auch möglich, anstelle der direkten Ansteuerung der Beeinflussungseinrichtung 16 im Schritt S19 eine Speicherung der entsprechenden Prozessführungsgrößen P vorzunehmen. In diesem Fall könnte der Rechner 1 offline und/oder nicht in Echtzeit arbeiten und dennoch die Beeinflussungseinrichtung 16 steuern, wenn nunmehr auch nur noch indirekt.

Mittels der erfindungsgemäßen Vorgehensweise - insbesondere der Berücksichtigung der Abhängigkeit der Temperatur T auch vom Kohlenstoffanteil cA im Austenit - ist somit eine erheblich einfachere und zugleich auch bessere Modellierung möglich als im Stand der Technik.

**Patentansprüche**

1. Modellierverfahren für den zeitlichen Verlauf des Zustands (Z) eines Stahlvolumens (13) durch einen.Rechner (1),

   - wobei das Stählvolumen (13) im Rechner (i) durch eine Auzahl von Volumenelementen (14) modelliert wird,
   - wobei der Zustand (Z) des Stahlvolumens (13) zu einem bestimmten Zeitpunkt (t) für jedes der Volumenelemente (14) Größen (e, pA, cA) umfasst, die für eine zu diesem Zeitpunkt (t) in dem jeweiligen Volumenelement (14) vorhandene Enthalpie (e) und für Anteile (pA, pF, pZ) charakteristisch sind, in denen der Stahl im jeweiligen Volumenelement (14) zu diesem Zeitpunkt (t) in'den Phasen Austenit, Ferrit und Zementit vorliegt,
   - wobei der Rechner (1) für mindestens eines der Volumenelemente (14) den zeitlichen Verlauf der charakteristischen Größen (e, pA, cA) durch Lösen einer Wärmeleitungsgleichung und einer Phasenumwandlungsgleichung ermittelt,
   - wobei je eine der charakteristischen Größen (e, pA, cA) eine innerhalb des jeweiligen Volumenelements (14) örtlich invariable mittlere Konzentration .(cA) interstitieller Elemente in der Phase Austenit des jeweiligen Volumenelements (14), der Anteil (pA) an der Phase Austenit im jeweiligen Volumenelement (14) und die Enthalpie (e) des jeweiligen Volumenelements (14) ist, .so dass die Anteile (pF, pZ) an den Phasen Ferrit und Zementit im jeweiligen Volumenelement (14) von den charakteristischen Größen (e, pA, cA) abgeleitete Größen sind.

2. Modellierverfahren nach Anspruch 1,
   **dadurch gekennzeichnet, dass** der Rechner (1) im Rahmen des Lösens der Wärmeleitungsgleichung und/oder im Rahmen des Lösens der Phasenumwandlungsgleichung für das mindestens eine Volumenelement (14) eine Beziehung zwischen der Enthalpie (e) und der Temperatur (T) ermittelt und dabei berücksichtigt, dass die Beziehung nicht nur von den Anteilen (pA, pF, pZ), sondern auch von der Konzentration (cA) interstitieller Elemente als solcher abhängt.

3. Modellierverfahren nach Anspruch 2,
   **dadurch gekennzeichnet,**

   - **dass** die Ermittlung der Beziehung zwischen der Enthalpie (e) und der Temperatur (T) anhand der Gleichung

$$e = pAeA(T) + pFeF(T) + pZeZ(T)$$

erfolgt, wobei pA, pF und pZ die Anteile sind, in denen der Stahl ein dem mindestens einen Volumenelement (14) in den Phasen Austenit, Ferrit und Zementit vorliegt, und eA, eF und eZ Funktionen sind, die jeweils eine Beziehung zwischen der Enthalpie (e) und der Temperatur (T) in dem mindestens einen Volumenelement (14) für den Fall beschreiben, dass das Volumenelement (14) ausschließlich in der Phase Austenit, Ferrit bzw. Zementit vorliegt, und

- **dass** bei der Funktion eA berücksichtigt wird, dass die Beziehting zwischen der Enthalpie (e) und der Temperatur (T) in der Phase Austenit auch von der Konzentration (cA) interstitieller Elemente in der Phase Austenit als solcher abhänge.

4. Modellierverfahren nach einem der obigen Ansprüche,
**dadurch gekennzeichnet, dass** der Rechner (1) bereits vor der Modellierung des zeitlichen Verlaufs des Zustands (Z) des Stahlvolumens (13) für eine Vielzahl von Werten der charakteristischen Größen (e, pA, cA) die Beziehung zwischen der Enthalpie (e) und der Temperatur (T) ermittelt und als Stützstellenfeld abspeichert und dass der Rechner (1) im Rahmen der Modellierung des zeitlichen Verlaufs des Zustands des Stahlvolumens (13) die in dem mindestens einen Volumenelement (14) herrschende Temperatur (T) anhand des Stützstellenfeldes ermittelt.

5. Modellierverfahren nach einem der obigen Ansprüche,
**dadurch gekennzeichnet, dass** der Rechner (1) bereits vor der Modellierung des zeitlichen Verlaufs des Zustands (Z) des Stahlvolumens (13) für eine Vielzahl von Werten der charakteristischen Größen (e, pA, -cA)- eine Beziehung zwischen der Enthalpie (e) und der Wärmeleitfähigkeit (λ) ermittelt und als Stützstellenfeld abspeichert und dass der Rechner (1) im Rahmen der Modellierung des zeitlichen Verlaufs des Zustands des Stahlvolumens (13) die in dem mindestens einen Volumenelement (14) herrschende Wärmeleitfähigkeit (λ) anhand des Stützstellenfeldes ermittelt.

6. Modellierverfahren nach einem der obigen Ansprüche,
**dadurch gekennzeichnet,**

   - **dass** die Wärmeleitungsgleichung im mehr- bzw. eindimensionalen Fall die Form

$$\frac{\partial e}{\partial t} - div\left[\frac{\lambda}{\rho} \cdot gradT\right] = \frac{\partial Q}{\partial t} \qquad \text{bzw.} \qquad \frac{\partial e}{\partial t} - \frac{\partial}{\partial x}\left[\frac{\lambda}{\rho} \cdot \frac{\partial T}{\partial x}\right] = \frac{\partial Q}{\partial t}$$

aufweist,
   - **dass** λ die Wärmeleitfähigkeit des mindestens einen Volumenelements (14), ρ die Dichte des Stahls und Q eine Wärmemenge, die in dem mindestens einen Volumenelement (14) durch äußere Einflüsse erzeugt wird, sind und
   - **dass** die in dem mindestens einen Volumenelement (14) durch äußere Einflüsse erzeugte Wärmemenge (Q) keine Beiträge enthält, die von Phasenumwandlungen herrühren.

7. Modellierverfahren nach einem der Ansprüche 1 bis 6, **dadurch gekennzeichnet, dass** der Rechner (1) im Rahmen des Lösens der Phasenumwandlungsgleichung die Gibbsschen freien Enthalpien der Phasen Austenit, Ferrit und Zementit, anhand der Gibbsschen freien Enthalpien Umwandlungsraten der Phasen Austenit, Ferrit und Zementit und anhand der Umwandlungsraten die Anteile (pA, pF, pZ) an den Phasen Austenit, Ferrit und Zementit ermittelt.

8. Modellierverfahren nach einem der Ansprüche 1 bis 6,
**dadurch gekennzeichnet, dass** der Rechner (1) im Rahmen des Lösens der Phasenumwandlungsgleichung

   - unter Lösen mindestens eines Stefan-Problems für das mindestens eine Völumenelement (14) einen aüstenitischen Bereich und eine Verteilung einer Konzentration der interstitieller Elemente im austenitischen Bereich des mindestens einen Volumenelements (14) ermittelt,
   - anhand des Verhältnisses des austenitischen Bereichs und des mindestens einen Volumenelements (14) insgesamt den Anteil (pA) an der Phase Austenit ermittelt und
   - durch Mittelung der Verteilung der Konzentration interstitieller Elemente im austenitischen Bereich des mindestens einen Volumenelements (14) die mittlere Konzentration (cA) interstitieller Elemente in der Phase. Austenit ermittelt.

9. Modellierverfahren nach einem der obigen Ansprüche,
**dadurch gekennzeichnet, dass** der Rechner (1) das Modellierverfahren online und in Echtzeit mit dem Durchlauf eines korrespondierenden tatsächlichen Stahlvolumens (13') durch eine Beeinflussungseinrichtung (16) zum thermischen Beeinflussen des tatsächlichen Stahlvolumens (13') ausführt.

10. Modellierverfahren nach einem der obigen Ansprüche,
**dadurch gekennzeichnet, dass** der Rechner (1) unter Anwendung des Modellierverfahrens Prozessführungsgrößen (P) zur gezielten Beeinflussung des Zustands (Z') des tatsächlichen Stahlvolumens (13') ermittelt und an eine entsprechende Beeinflussungseinrichtung (16) zum thermischen Beeinflussen des tatsächlichen Stahlvolumens (13') übermittelt.

11. Modellierverfahren nach Anspruch 9 oder 10,
**dadurch gekennzeichnet, dass** dem Rechner (1) eine nach dem thermischen Beeinflussen des tatsächlichen Stahlvolumens (13') erfasste tatsächliche Temperatur (T') des tatsächlichen Stahlvolumens (13') zugeführt wird und dass der Rechner (1) die tatsächliche Temperatur (T') mit der korrespondierenden, im Rahmen des Modellierverfahrens ermittelten Temperatur (T) vergleicht und das Modellierverfahren entsprechend anpasst.

12. Datenträger mit einem auf dem Datenträger gespeicherten Computerprogramm (11) nur Durchfuhrung eines Modellierverfahrens nach einem der obigen Ansprüche.

13. Rechner mit einem Massenspeicher (3), in dem ein Computerprogramm (11) hinterlegt ist, so dass der Rechner (1) bei Aufruf des Computerprogramms (11) ein Modellierverfahren nach einem der Ansprüche 1 bis 11 ausführt.

14. Beeinflussungseinrichtung zum Beeinflussen der Temperatur (T') eines tatsächlichen Stahlvolumens (13'), insbesondere Kühlstrecke,
**dadurch gekennzeichnet, dass** sie von einem Rechner (1) nach Anspruch 13 gesteuert wird.

15. Stahl,
**dadurch gekennzeichnet, dass** er eine Beeinflussungseinrichtung (16) nach Anspruch 14 durchlaufen hat, wobei'die Prozessführungsgrößen (P) nach Anspruch 10 oder Anspruch 10 und 11 ermittelt wurden.


**Claims**

1. Modelling method for the time gradient of the state (Z) of a steel volume (13) by means of a computer (1),

   - wherein the steel volume (13) is modelled in the computer (1) by a number of volume elements (14),
   - wherein the state (Z) of the steel volume (13) at a specific time (t) includes variables (e, pA, cA) for each of the volume elements (14) which are characteristic for the enthalpy (e) present at this time (t) in the respective volume element (14) and for proportions (pA, pF, pZ) in which the steel in the respective volume element (14) at this time (t) is present in the phases austenite, ferrite and cementite,
   - wherein the computer (1) for at least one of the volume elements (14) determines the time gradient of the characteristic variables (e, pA, cA) by solving a thermal conductivity equation and a phase transition equation,
   - wherein one of the characteristic variables (e, pA, cA) is a locally invariable average concentration (cA) of interstitial elements within the respective volume element (14) in the austenite phase of the respective volume element (14), the proportion (pA) of the phase austenite in the respective volume element (14) and the enthalpy (e) of the respective volume element (14) respectively, so that the proportions (pF, pZ) of the phases ferrite and cementite in the respective volume element (14) are variables derived from the characteristic variables (e, pA, cA).

2. Modelling method according to claim 1,
**characterised in that** the computer (1), within the framework of solving the thermal conductivity equation and/or within the framework of solving the phase change equation, determines for the at least one volume element (14) a relationship between the enthalpy (e) and the temperature (T) and in doing so takes into account that the relationship not only depends on the proportions (pA, pF, pZ), but also on the concentration (cA) of interstitial elements as such.

3. Modelling method according to claim 2,
**characterised in that**

- the relationship between the enthalpy (e) and the temperature (T) is determined on the basis of the equation

$$e = pAeA(T) + pFeF(T) + pZeZ(T) \, ,$$

wherein pA, pF and pZ are the proportions in which the steel in the at least one volume element (14) is present in the phases austenite, ferrite and cementite, and eA, eF and eZ are functions which in each case describe a relationship between the enthalpy (e) and the temperature (T) in the at least one volume element (14) for the case in which the volume element (14) is exclusively present in the phase austenite, ferrite or cementite respectively, and
- account is taken, for the function eA, of the fact that the relationship between the enthalpy (e) and the temperature (T) in the austenite phase also depends on the concentration (cA) of interstitial elements in the austenite phase as such.

4. Modelling method according to one of the above claims, **characterised in that** the computer (1) even before the modelling of the time gradient of the state (Z) of the steel volume (13) determines for a plurality of values of the characteristic variables (e, pA, cA) the relationship between the enthalpy (e) and the temperature (T) and stores it as a checkpoint field and that the computer (1), within the framework of the modelling of the time gradient of the state of the steel volume (13), determines the temperature (T) obtaining in the at least one volume element (14) on the basis of the checkpoint field.

5. Modelling method according to one of the above claims, **characterised in that** the computer (1), even before the modelling of the time gradient of the state (Z) of the steel volume (13), determines for a plurality of values of the characteristic variables (e, pA, cA) a relationship between the enthalpy (e) and the thermal conductivity ($\lambda$) and stores it as a checkpoint field and that the computer (1), within the framework of the modelling of the time gradient of the state of the steel volume (13), determines the thermal conductivity ($\lambda$) obtaining in the at least one volume element (14) on the basis of the checkpoint field.

6. Modelling method according to one of the above claims, **characterised in that**,

- the thermal conductivity equation in the multidimensional or one-dimensional case takes the form

$$\frac{\partial e}{\partial t} - div\left[\frac{\lambda}{\rho} \cdot gradT\right] = \frac{\partial Q}{\partial t} \qquad \text{or} \qquad \frac{\partial e}{\partial t} - \frac{\partial}{\partial x}\left[\frac{\lambda}{\rho} \cdot \frac{\partial T}{\partial x}\right] = \frac{\partial Q}{\partial t},$$

- that $\lambda$, is the thermal conductivity of the at least one volume element (14), $\rho$ is the density of the steel and Q is a thermal quantity which is created in the at least one volume element (14) by outside influences, and
- the quantity of heat (Q) generated in the at least one volume element (14) by outside influences does not contain any contributions which emanate from the phase transitions.

7. Modelling method according to one of claims 1 to 6, **characterised in that** the computer (1) determines, within the framework of solving the phase transition equation, the Gibbsean free enthalpies of the phases austenite, ferrite and cementite, on the basis of the Gibbsean free enthalpies transition rates of the phases austenite, ferrite and cementite, and on the basis of the transition rates the proportions (pA, pF, pZ) of the phases austenite, ferrite and cementite.

8. Modelling method according to one of claims 1 to 6, **characterised in that** the computer (1), within the framework of solving the phase transition equation,

- by solving at least one Stefan problem for the at least one volume element (14), determines an austenitic region and a distribution of a concentration of the interstitial elements in the austenitic region of the at least one volume element (14),
- on the basis of the relationship of the austenitic region and of the at least one volume element (14) determines overall the proportion (pA) of the austenite phase and
- by averaging the distribution of the concentration of interstitial elements in the austenitic region of the at least one volume element (14), determines the average concentration (cA) of interstitial elements in the austenite phase.

9. Modelling method according to one of the above claims, **characterised in that** the computer (1) executes the modelling method online and in real-time with the passage of a corresponding actual steel volume (13') through an influencing device (16) for thermal influences of the actual steel volume (13').

10. Modelling method according to one of the above claims, **characterised in that** the computer (1) by applying the modelling method determines process management variables (P) for explicit influencing of the state (Z') of the actual steel volume (13') and transfers it to a corresponding influencing device (16) for thermal influencing of the actual steel volume (13').

11. Modelling method according to claim 9 or 10, **characterised in that** an actual temperature (T') of the actual steel volume (13') detected after the thermal influencing of the actual steel volume (13') is fed to the computer (1) and that the computer (1) compares the actual temperature (T') with the corresponding temperature (T) determined within the framework of the modelling method and adapts the modelling method accordingly.

12. Data medium with a computer program (11) stored on the data medium for executing a modelling method according to one of the above claims.

13. Computer with a mass storage device (3), in which a computer program (11) is stored so that the computer (1), on execution of the computer program (11), executes a modelling method according to one of claims 1 to 11.

14. Influencing device for influencing the temperature (T') of an actual steel volume (13'), especially a cooling line, **characterised in that** it is controlled by a computer (1) according to claim 13.

15. Steel
    **characterised in that** it has passed through an influencing device (16) according to claim 14, with the process management variables (P) having been determined according to claim 10 or claim 10 and 11.

**Revendications**

1. Procédé de modélisation pour la variation dans le temps de l'état (Z) d'un volume d'acier (13) au moyen d'un ordinateur (1),

   - le volume d'acier (13) étant modélisé dans l'ordinateur (1) au moyen d'un nombre d'éléments de volume (14),
   - l'état (Z) du volume d'acier (13) à un instant (t) déterminé comprenant, pour chacun des éléments de volume (14), des grandeurs (e, pA, cA) qui sont caractéristiques d'une enthalpie (e) présente dans l'élément de volume (14) respectif à cet instant (t) et de proportions (pA, pF, pZ) des phases austénite, ferrite et cémentite de l'acier dans l'élément de volume (14) respectif à cet instant (t),
   - l'ordinateur (1) déterminant la variation dans le temps des grandeurs caractéristiques (e, pA, cA) pour au moins un des éléments de volume (14) en résolvant une équation de conduction thermique et une équation de transition de phases,
   - les grandeurs caractéristiques (e, pA, cA) représentant chacune, respectivement, une concentration moyenne (cA) en éléments interstitiels dans la phase austénite de l'élément de volume (14) respectif, localement invariable à l'intérieur de l'élément de volume (14) respectif, la proportion (pA) de la phase austénite dans l'élément de volume (14) respectif et l'enthalpie (e) de l'élément de volume (14) respectif, de sorte que les proportions (pF, pZ) des phases ferrite et cémentite dans l'élément de volume (14) respectif sont des grandeurs dérivées des grandeurs caractéristiques (e, pA, cA).

2. Procédé de modélisation selon la revendication 1, **caractérisé en ce que** l'ordinateur (1) établit pour l'au moins un élément de volume (14), dans le cadre de la résolution de l'équation de conduction thermique et/ou dans le cadre de la résolution de l'équation de transition de phases, une relation entre l'enthalpie (e) et la température (T), tenant ainsi compte du fait que la relation ne dépend pas seulement des proportions (pA, pF, pZ), mais également de la concentration (cA) en éléments interstitiels en tant que telle.

3. Procédé de modélisation selon la revendication 2, **caractérisé en ce que**

- la relation entre l'enthalpie (e) et la température (T) est déterminée au moyen de l'équation

$$e = pAeA(T) + pFeF(T) + pZeZ(T),$$

pA, pF et pZ étant les proportions des phases austénite, ferrite et cémentite de l'acier dans l'au moins un élément de volume (14) et eA, eF et eZ étant des fonctions qui décrivent à chaque fois une relation entre l'enthalpie (e) et la température (T) dans l'au moins un élément de volume (14) dans le cas où l'élément de volume (14) se présente uniquement en phase austénite, ferrite resp. cémentite et
- **en ce que** l'on tient compte, concernant la fonction eA, du fait que la relation entre l'enthalpie (e) et la température (T) dans la phase austénite dépend également de la concentration (cA) en éléments interstitiels dans la phase austénite en tant que telle.

4.  Procédé de modélisation selon l'une des revendications précédentes, **caractérisé en ce que** l'ordinateur (1) détermine la relation entre l'enthalpie (e) et la température (T) pour une pluralité de valeurs des grandeurs caractéristiques (e, pA, cA) avant même la modélisation de la variation dans le temps de l'état (Z) du volume d'acier (13) et la mémorise en tant que champ de points de support, et **en ce que** l'ordinateur (1) détermine, dans le cadre de la modélisation de la variation dans le temps de l'état du volume d'acier (13), la température (T) régnant dans l'au moins un élément de volume (14) en se servant du champ de points de support.

5.  Procédé de modélisation selon l'une des revendications précédentes, **caractérisé en ce que** l'ordinateur (1) détermine une relation entre l'enthalpie (e) et la conductivité thermique ($\lambda$) pour une pluralité de valeurs des grandeurs caractéristiques (e, pA, cA) avant même la modélisation de la variation dans le temps de l'état (Z) du volume d'acier (13) et la mémorise en tant que champ de points de support, et **en ce que** l'ordinateur (1) détermine, dans le cadre de la modélisation de la variation dans le temps de l'état du volume d'acier (13), la conductivité thermique ($\lambda$) régnant dans l'au moins un élément de volume (14) en se servant du champ de points de support.

6.  Procédé de modélisation selon l'une des revendications précédentes, **caractérisé en ce que**

- l'équation de conduction thermique prend la forme

$$\frac{\partial e}{\partial t} - div\left[\frac{\lambda}{\rho} \cdot gradT\right] = \frac{\partial Q}{\partial t} \quad \text{resp.} \quad \frac{\partial e}{\partial t} - \frac{\partial}{\partial x}\left[\frac{\lambda}{\rho} \cdot \frac{\partial T}{\partial x}\right] = \frac{\partial Q}{\partial t}$$

dans le cas multidimensionnel resp. unidimensionnel,
- **en ce que** représente la conductivité thermique de l'au moins un élément de volume (14), $\rho$ la masse volumique de l'acier et Q une quantité de chaleur qui est produite dans l'au moins un élément de volume (14) par des influences extérieures et
- **en ce que** les transitions de phase ne contribuent nullement à la quantité de chaleur (Q) produite par des influences extérieures dans l'au moins un élément de volume (14).

7.  Procédé de modélisation selon l'une des revendications 1 à 6, **caractérisé en ce que** l'ordinateur (1) détermine, dans le cadre de la résolution de l'équation de transition de phases, les enthalpies libres de Gibbs des phases austénite, ferrite et cémentite, détermine les taux de transition des phases austénite, ferrite et cémentite sur la base des enthalpies libres de Gibbs et détermine les proportions (pA, pF, pZ) des phases austénite, ferrite et cémentite sur la base des taux de transition.

8.  Procédé de modélisation selon l'une des revendications 1 à 6, **caractérisé en ce que**, dans le cadre de la résolution de l'équation de transition de phases, l'ordinateur (1)

- détermine pour l'au moins un élément de volume (14), en résolvant au moins un problème de Stefan, une zone austénitique et une distribution d'une concentration en éléments interstitiels dans la zone austénitique de l'au moins un élément de volume (14),
- détermine la proportion (pA) globale de la phase austénite sur la base du rapport de la zone austénitique et de l'au moins un élément de volume (14) et

- détermine la concentration moyenne (cA) en éléments interstitiels dans la phase austénite en faisant la moyenne de la distribution de la concentration en éléments interstitiels dans la zone austénitique de l'au moins un élément de volume (14).

**9.** Procédé de modélisation selon l'une des revendications précédentes, **caractérisé en ce que** l'ordinateur (1) exécute le procédé de modélisation en ligne et en temps réel du passage d'un volume d'acier effectif (13') correspondant à travers un dispositif d'influence (16) permettant de soumettre le volume d'acier effectif (13') à une influence thermique.

**10.** Procédé de modélisation selon l'une des revendications précédentes, **caractérisé en ce que** l'ordinateur détermine, en utilisant le procédé de modélisation, des grandeurs de pilotage de processus (P) pour influer de manière ciblée sur l'état (Z') du volume d'acier effectif (13') et les transmet à un dispositif d'influence (16) correspondant permettant de soumettre le volume d'acier effectif (13') à une influence thermique.

**11.** Procédé de modélisation selon la revendication 9 ou 10, **caractérisé en ce qu'**une température effective (T') du volume d'acier effectif (13') saisie après que le volume d'acier effectif (13') a été soumis à une influence thermique est fournie à l'ordinateur (1) et **en ce que** l'ordinateur (1) compare la température effective (T') à la température (T) correspondante déterminée dans le cadre du procédé de modélisation et adapte le procédé de modélisation en conséquence.

**12.** Support de données et programme informatique (11) mémorisé sur le support de données pour l'exécution d'un procédé de modélisation selon l'une des revendications précédentes.

**13.** Ordinateur pourvu d'une mémoire de grande capacité (3) dans laquelle un programme informatique (11) est enregistré, de façon que l'ordinateur (1) exécute un procédé de modélisation selon l'une des revendications 1 à 11 lorsque le programme informatique (11) est appelé.

**14.** Dispositif d'influence permettant d'influer sur la température (T') d'un volume d'acier effectif (13'), notamment parcours de refroidissement, **caractérisé en ce que** le dispositif est commandé par un ordinateur (1) selon la revendication 13.

**15.** Acier, **caractérisé en ce que** l'acier est passé à travers un dispositif d'influence (16) selon la revendication 14, les grandeurs de pilotage de processus (P) ayant été déterminées selon la revendication 10 ou les revendications 10 et 11.

## FIG 1

## FIG 4

$$e = pAeA(T) + pFeF(T) + pZeZ(T)$$

$$\text{mit } eA(T) = eA(T, cA)$$

$$\lambda = pA\lambda A(e) + pF\lambda F(e) + pZ\lambda Z(e)$$

## FIG 5

$$\frac{\partial e}{\partial t} - \text{div}\left[\frac{\lambda}{\rho} \cdot \text{grad}T\right] = \frac{\partial Q}{\partial t}$$

$$\frac{dpA}{dt} = f_1(\text{Gibbs}) \qquad \frac{dpF}{dt} = f_2(\text{Gibbs}) \qquad \frac{dpZ}{dt} = f_3(\text{Gibbs})$$

# FIG 2

nimm chemische Zusammensetzung C des Stahls (einschließlich des Gesamtanteils c interstitieller Elemente) entgegen — S1

S2

ermittle für eine Vielzahl von möglichen Werten der Enthalpie e, des Anteils pA an der Phase Austenit und der mittleren Kohlenstoffkonzentration cA in der Phase Austenit eine Beziehung zwischen der Enthalpie e einerseits und der Temperatur T bzw. der Wärmeleitfähigkeit $\lambda$ andererseits; speichere die so ermittelten Stützstellenfelder

nimm Anfangszustand ZA entgegen — S3

S4

nimm zeitlichen Verlauf einer tatsächlichen thermischen Behandlung entgegen

S6   $Z = ZA$ — S5

ermittle für mindestens ein Volumenelement 14 anhand der Stützstellenfelder die Wärmeleitfähigkeit $\lambda$ und die Temperatur T und löse für einen Zeitschritt $\delta t$ die Wärmeleitungsgleichung; aktualisiere Z entsprechend für alle Volumenelemente 14

löse für mindestens ein Volumenelement 14 die Phasenumwandlungs- gleichung für einen Zeitschritt $\delta t$ ; aktualisiere Z entsprechend für alle Volumenelemente 14 — S7

S8

FERTIG = "das Stahlvolumen ist aus der Beeinflussungseinrichtung ausgetreten"

FERTIG?   —

S9   +

$ZE = Z$ — S10

nimm tatsächlichen Endzustand Z' entgegen — S11

$\delta$ = "ZE stimmt zumindest in etwa mit ZE' überein" — S12

$\delta$   —

S13   +   passe Modellierverfahren entsprechend an — S14

FIG 3

## FIG 6

$$\frac{\partial e}{\partial t} - \frac{\partial}{\partial x}\left[\frac{\lambda}{\rho} \cdot \frac{\partial T}{\partial x}\right] = \frac{\partial Q}{\partial t}$$

$$\frac{dpA}{dt} = f_1 \text{(Stefan-Problem)} \qquad \frac{dcA}{dt} = f_2 \text{(Stefan-Problem)}$$

## FIG 7

ermittle für mindestens ein Volumenelement 14 die Gibbsschen freien Enthalpien der Phasen Austenit, Ferrit und Zementit

ermittle anhand der Gibbsschen freien Enthalpien und der Anteile pA, pF, pZ an den Phasen Austenit, Ferrit und Zementit Umwandlungsraten der Phasen Austenit, Ferrit und Zementit

ermittle anhand der Umwandlungsraten der Phasen Austenit, Ferrit und Zementit und der Anteile pA, pF, pZ an den Phasen Austenit, Ferrit und Zementit Anteile pA, pF, pZ an den Phasen Austenit, Ferrit und Zementit

## FIG 8

ermittle für mindestens ein Volumenelement 14 einen austenitischen Bereich und eine Verteilung der Kohlenstoffkonzentration im austenitischen Bereich des jeweiligen Volumenelements 14

ermittle anhand des Verhältnisses des austenitischen Bereichs und des Volumenelements insgesamt den Anteil pA an der Phase Austenit im betrachteten Volumenelement

ermittle durch Mittelung der Verteilung der Kohlenstoffkonzentration die mittlere Kohlenstoffkonzentration cA im austenitischen Bereich

# FIG 9

nimm Anfangszustand ZA entgegen — S3

nimm zeitlichen Verlauf eines gewünschten Sollzustands Z* entgegen — S4'

Z=ZA — S5

setze anfänglichen Verlauf einer Prozessführungsgröße P — S15

S6'

ermittle für mindestens ein Volumenelement 14 anhand der Stützstellenfelder die Wärmeleitfähigkeit λ und die Temperatur T und löse für einen Zeitschritt δt die Wärmeleitungsgleichung; bestimme so Enthalpie e eines vorläufigen Zustannds Z'

löse für mindestens ein Volumenelement 14 die Phasenumwandlungsgleichung für einen Zeitschritt δt ; bestimme so Anteile pA, pF, und pZ des vorläufigen Zustands Z' — S7'

OK="Z' entspricht - zumindest im Wesentlichen - Z* zum betrachteten Zeitschritt δt — S16

OK?

S18

variiere Prozessführungsgröße P, so dass Z' an Z* für betrachteten Zeitschritt δt angenähert wird

+ S17

S19

Z=Z'
übermittle Prozessführungsgröße P an Beeinflussungseinrichtung

S8

FERTIG="das Stahlvolumen ist aus der Beeinflussungseinrichtung ausgetreten"

FERTIG? —

S9 +

ZE=Z

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10129565 B4
- DE 10251716 B3
- DE 102004005919

**In der Beschreibung aufgeführte Nicht-Patentliteratur**

- **TAMAS RETI et al.** *Computational Materials Science,* 2001, vol. 22, 261-278